# EUROPEAN PATENT SPECIFICATION

(11) **EP 3 135 944 B1**
(45) Date of publication and mention of the grant of the patent: **25.10.2017**
(21) Application number: 16183968.3
(22) Date of filing: 12.08.2016
(51) Int. Cl.: F16D 27/00, B62D 5/00

(54) **DRIVING FORCE TRANSMISSION DEVICE**
VORRICHTUNG ZUR ÜBERTRAGUNG EINER ANTRIEBSKRAFT
DISPOSITIF DE TRANSMISSION DE FORCE DE CONDUITE

(30) Priority: 19.08.2015 JP 2015162228
(43) Date of publication of application: 01.03.2017
(73) Proprietor: JTEKT Corporation, Chuo-ku, Osaka-shi Osaka 542-8502 (JP)
(72) Inventor: YAMATANI, Tomoya, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 1 939 069
- EP-A1- 2 610 132
- EP-A2- 2 641 813
- JP-A- 2005 155 834
- JP-A- 2009 144 774
- US-A1- 2010 314 212

## Description

### BACKGROUND OF THE INVENTION

### 1. Field of the Invention

The present invention relates to driving force transmission devices that can permit and cut off transmission of a rotational driving force between an input shaft and an output shaft.

### 2. Description of the Related Art

Conventionally, driving force transmission devices are known which can permit and cut off transmission of a rotational driving force between an input shaft and an output shaft. A driving force transmission device described in Japanese Patent Application Publication No. 2009-144774 (JP 2009-144774 A) includes a clutch unit and an electromagnetic attraction portion that controls engagement and disengagement of the clutch unit. The electromagnetic attraction portion includes an electromagnet, a rotor, and an armature. The electromagnet can rotate relative to a shaft body included in one of the input shaft and the output shaft. The rotor faces the electromagnet in the axial direction of the shaft body. The armature is placed on the opposite side of the rotor from the electromagnet so as to face the rotor and can move in the axial direction. When a current is applied to the electromagnet, a magnetic field is produced around the rotor, and the armature is attracted by the rotor and moves in the axial direction. The clutch unit is engaged or disengaged by the axial movement of the armature.

In such an electromagnetic attraction portion, a load (attraction force) that is applied to the armature is inversely proportional to the square of the size of an air gap between the rotor and the armature. It is therefore necessary to accurately adjust the air gap between the rotor and the armature. Armatures and rotors have dimensional variation, which results in assembly variation. In order to ensure an air gap of a predetermined size between the rotor and the armature regardless of the dimensional variation and the assembly variation, the air gap need be accurately adjusted for each product.

One technique is to form a stepped portion in the outer periphery of a shaft body and interpose a disc-shaped shim ring for air gap adjustment between the stepped portion and a rotor hub. In this technique, a multiplicity of shim rings (spacers) having different thicknesses on the order of 0.1 mm are provided, and a shim ring having an optimal thickness is selected for each product in order to ensure an air gap of a predetermined size. In this case, it is complicated to select a shim ring having an optimal thickness from the multiplicity of shim rings.

### SUMMARY OF THE INVENTION

It is one object of the present invention to provide a driving force transmission device that can easily make accurate adjustment of an air gap between a rotor and an armature.

According to one aspect of the present invention, a driving force transmission device includes: an input shaft and an output shaft which are placed coaxially with each other; a clutch unit that connects and disconnects the input shaft and the output shaft to and from each other; an electromagnet that is disposed so that the electromagnet can rotate relative to a shaft body included in one of the input shaft and the output shaft; a rotor that faces the electromagnet in an axial direction of the shaft body; an armature that is disposed so as to face an opposite side of the rotor from the electromagnet and so that the armature can move in the axial direction, and that engages and disengages the clutch unit; an internally threaded portion that is formed on an inner periphery of the rotor and engages with an externally threaded portion formed on an outer periphery of the shaft body; and an elastic member that elastically presses the rotor screw-fitted on the outer periphery of the shaft body toward the electromagnet; and a rotation stopper structure that stops rotation of the rotor relative to the shaft body.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a diagram showing the general configuration of a steering system having mounted thereon a clutch unit that is an example of a driving force transmission device according to an embodiment of the present invention;
FIG. 2 is a sectional view of the driving force transmission device;
FIG. 3 is a perspective view mainly showing the configuration of the clutch unit;
FIG. 4 is an exploded perspective view mainly showing the configuration of the clutch unit;
FIG. 5 is a sectional view taken along line V-V and viewed in the directions of arrows V in FIG. 2;
FIG. 6 is a perspective view of an armature and wedge members;
FIGS. 7A and 7B are perspective views of the wedge member;
FIG. 8 is a diagram showing the positional relationship between the armature and a rotor at the time the clutch unit is in an engaged state;
FIG. 9 is a sectional view showing the clutch unit in a disengaged state;
FIG. 10 is a diagram showing the positional relationship between the armature and the rotor at the time the clutch unit is in the disengaged state;
FIGS. 11A, 11B, and 11C are diagram showing an operation of attaching the rotor to a shaft body portion; and
FIG. 12 is a diagram showing the general configuration of a main part of a driving force transmission device according to another embodiment of the present invention.

### DETAILED DESCRIPTION OF EMBODIMENTS

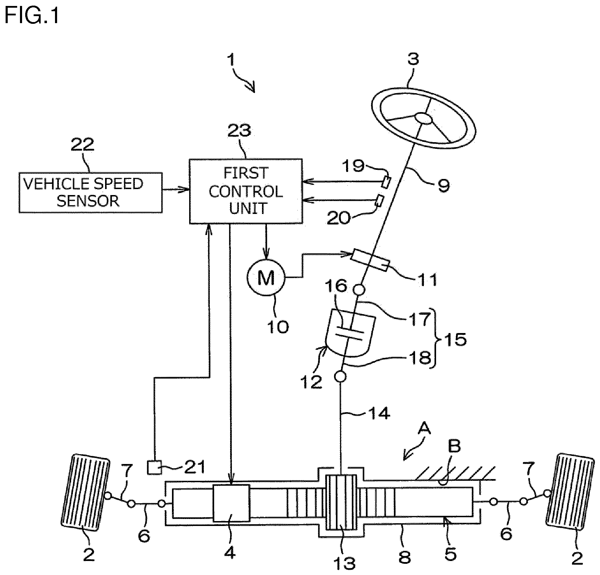

Embodiments of the present invention will be described in detail below with reference to the accompanying drawings. FIG. 1 is a diagram showing the general configuration of a steering system 1 having mounted thereon a clutch unit 16 that is an example of a driving force transmission device according to an embodiment of the present invention. The steering system 1 uses what is called a steer-by-wire system in which a steering member 3 such as a steering wheel is not mechanically coupled to a steering operation mechanism A for steering steered wheels 2.

In the steering system 1, operation of a steering operation actuator 4 is controlled in accordance with an operation of turning the steering member 3. The operation of the steering operation actuator 4 is converted to a linear motion of a steered shaft 5 in the lateral direction of a vehicle. The linear motion of the steered shaft 5 is converted to a steered motion of the right and left steered wheels 2 to be steered. Steering of the vehicle is thus achieved.

Specifically, the steering operation actuator 4 includes, e.g., a motor. The driving force of the motor is converted to an axial linear motion of the steered shaft 5 by a motion conversion mechanism (a ball screw device etc.) in association with the steered shaft 5. The linear motion of the steered shaft 5 is transmitted to tie rods 6 coupled to both ends of the steered shaft 5, so that knuckle arms 7 are caused to pivot. Steering of the steered wheels 2 supported by the knuckle arms 7 is thus achieved. The steering operation mechanism A includes the steered shaft 5, the tie rods 6, and the knuckle arms 7. A steered shaft housing 8 that supports the steered shaft 5 is fixed to a vehicle body B.

The steering member 3 is coupled to a steering shaft 9 so that the steering member 3 can rotate with the steering shaft 9. A motor 10 and a reduction gear 11 are attached to the steering shaft 9. The reduction gear 11 reduces the speed of output rotation of the motor 10. The steering shaft 9 is coupled to the steering operation mechanism A via a driving force transmission device 12 that is an example of the driving force transmission device. Specifically, the steered shaft 5 of the steering operation mechanism A includes a rack shaft. A pinion shaft 14 is coupled to the steering shaft 9 via an intermediate shaft 15. The pinion shaft 14 has a pinion 13 at its tip end, and the pinion 13 engages with the rack shaft. The driving force transmission device 12 is placed in an intermediate portion of the intermediate shaft 15. The driving force transmission device 12 includes the clutch unit 16.

The intermediate shaft 15 includes a first shaft 17 and a second shaft 18. The first shaft 17 is coupled to the steering shaft 9. The second shaft 18 is coaxial with the first shaft 17 and is coupled to the pinion shaft 14. The driving force transmission device 12 is interposed between the first and second shafts 17, 18. The clutch unit 16 of the driving force transmission device 12 permits and cuts off transmission of a rotational driving force between the first and second shafts 17, 18.

The steering system 1 is provided with a steering angle sensor 19 in association with the steering shaft 9. The steering angle sensor 19 detects the steering angle of the steering member 3. The steering shaft 9 is provided with a torque sensor 20. The torque sensor 20 detects steering torque applied to the steering member 3. The steering shaft 9 includes a torsion bar (not shown) that can be elastically torsionally deformed, and the steering torque is detected based on the amount of rotation of the torsion bar.

The steering system 1 is provided with a steered angle sensor 21, a vehicle speed sensor 22, etc. The steered angle sensor 21 is provided in association with the steered wheels 2 and detects the steered angle of the steered wheels 2. The vehicle speed sensor 22 detects the vehicle speed. Detection signals of various sensors including the sensors 19 to 22 are input to a first control unit 23. The first control unit 23 is formed by an electronic control unit (ECU) that includes a microcomputer. The first control unit 23 sets a target steered angle based on the steering angle detected by the steering angle sensor 19 and the vehicle speed detected by the vehicle speed sensor 22. The first control unit 23 drivingly controls the steering operation actuator 4 based on the deviation between the target steered angle and the steered angle detected by the steered angle sensor 21.

When the vehicle is operating normally, the first control unit 23 disengages the clutch unit 16 to mechanically separate the steering member 3 from the steering operation mechanism A. In this state, the first control unit 23 drivingly controls the motor 10 based on the detection signals of the steering angle sensor 19, the torque sensor 20, etc. so as to apply an appropriate reaction force in the opposite direction from the direction in which the steering member 3 is steered to the steering member 3. The output rotation of the motor 10 is reduced in speed (amplified) by the reduction gear 11 and transmitted to the steering member 3 via the steering shaft 9.

When the ignition of the vehicle is off, or in the event of abnormality such as malfunction of the steer-by-wire system, the first control unit 23 engages the clutch unit 16 to mechanically couple the steering member 3 to the steering operation mechanism A so that the steering operation mechanism A can be directly operated by the steering member 3. The embodiment uses the configuration in which the steering shaft 9 can be mechanically coupled to the steering operation mechanism A via the clutch unit 16. Mechanical fail-safe of the steer-by-wire system is thus implemented.

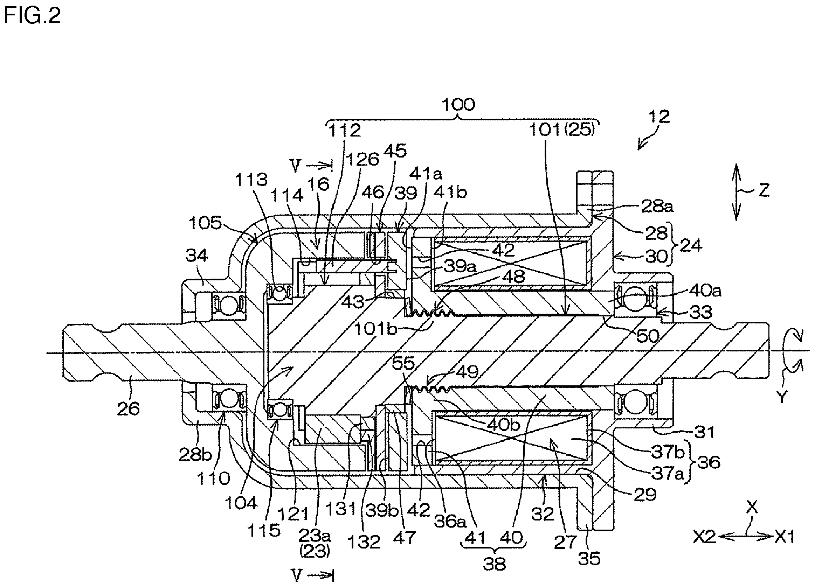

FIG. 2 is a sectional view of the driving force transmission device 12. The driving force transmission device 12 includes a housing 24, an input shaft 25, an output shaft 26, the clutch unit 16, and an electromagnetic attraction portion 27. The input shaft 25 and the output shaft 26 are placed coaxially with each other. The clutch unit 16 is accommodated in the housing 24 and connects and disconnects the input shaft 25 and the output shaft 26 to and from each other. The electromagnetic attraction portion 27 is accommodated in the housing 24 and drives engagement and disengagement of the clutch unit 16. The input shaft 25 is placed coaxially with the first shaft 17 (see FIG. 1) and can rotate with the first shaft 17. The input shaft 25 includes a shaft body portion 101 (shaft body) of an inner shaft 100. The inner shaft 100 is made of a magnetic material such as steel. The output shaft 26 is placed coaxially with the second shaft 18 (see FIG. 1) and can rotate with the second shaft 18. The input shaft 25 and the output shaft 26 have a cylindrical outer shape.

In the following description, the axial direction X refers to the axial direction of the inner shaft 100. The axial direction of an outer ring 105 and an inner ring 104 which are included in the clutch unit 16 and the axial direction of the electromagnetic attraction portion 27 are the same as the axial direction X. Regarding the axial direction X, one side X1 in the axial direction refers to the axial direction toward the input shaft 25 (the right direction in FIG. 2), and the other side X2 in the axial direction refers to the axial direction toward the output shaft 26 (the left direction in FIG. 2). The circumferential direction Y refers to the circumferential direction of the inner shaft 100. The circumferential direction of the outer ring 105 and the inner ring 104 which are included in the clutch unit 16 and the circumferential direction of the electromagnetic attraction portion 27 are the same as the circumferential direction Y. Regarding the circumferential direction Y, one side Y1 in the circumferential direction refers to the circumferential direction that is clockwise as viewed from the other side X2 in the axial direction, and the other side Y2 in the circumferential direction refers to the circumferential direction that is counterclockwise as viewed from the other side X2 in the axial direction.

The radial direction Z refers to the direction of the turning radius of the inner shaft 100. The radial direction of the inner ring 104 and the outer ring 105 which are included in the clutch unit 16 and the radial direction of the electromagnetic attraction portion 27 are the same as the radial direction Z. The housing 24 includes a housing body 28 and a lid 30. The housing body 28 is in the shape of a cylindrical container. The housing body 28 has a reduced diameter on the other side X2 in the axial direction. The lid 30 closes an opening 29 at an end 28a of the housing body 28 on the one side X1 in the axial direction. A part of the input shaft 25 projects toward the one side X1 in the axial direction beyond the lid 30. A part of the output shaft 26 projects toward the other side X2 in the axial direction beyond the housing body 28.

The lid 30 is in the shape of an annular plate and is made of steel. The lid 30 is a single-piece member formed by a first bearing support portion 31 and an electromagnet support portion 32. The first bearing support portion 31 has a cylindrical shape with a smaller diameter, and the electromagnet support portion 32 has a cylindrical shape with a larger diameter. The first bearing support portion 31 projects toward the one side X1 in the axial direction, and the electromagnet support portion 32 projects toward the other side X2 in the axial direction. A first bearing (bearing) 33 is placed on the inner periphery of the first bearing support portion 31. The first bearing 33 supports the input shaft 25 so that the input shaft 25 can rotate and cannot move in the axial direction X. For example, the first bearing 33 is a rolling bearing as shown in FIG. 2. An electromagnet 36 described later is fixed to the inner periphery of the electromagnet support portion 32.

The housing body 28 is made of steel. The housing body 28 has a flange 35 in its end 28a on the one side X1 in the axial direction. The flange 35 projects outward in the radial direction Z. The flange 35 is joined to the outer peripheral portion of the lid 30 by bolts etc., whereby the housing body 28 and the lid 30 are fixed together. The housing body 28 has a second bearing support portion 34 in an end 28b on the other side X2 in the axial direction (the side on which the diameter of the housing body 28 is reduced). The second bearing support portion 34 has a cylindrical shape with a smaller diameter, and a second bearing 110 is placed on the inner periphery of the second bearing support portion 34. The second bearing 110 supports the output shaft 26 so that the output shaft 26 can rotate and cannot move in the axial direction X. For example, the second bearing 110 is a rolling bearing as shown in FIG. 2.

The electromagnetic attraction portion 27 includes the annular electromagnet 36, a rotor 38, and an armature 39. The electromagnet 36 surrounds the shaft body portion 101 and is fixed to the housing body 28. The rotor 38 faces the other side X2 in the axial direction of the electromagnet 36. The armature 39 faces the other side X2 in the axial direction of the rotor 38. The shaft body portion 101 rotates relative to the housing body 28 that is stationary. The electromagnet 36 has an exciting coil 37a and a core 37b. The exciting coil 37a is a coil of copper wire etc. wound coaxially with the shaft body portion 101. The core 37b is placed close to the exciting coil 37a. The electromagnet 36 has an exciting surface in its end face on the other side X2 in the axial direction.

The rotor 38 has a tubular portion 40 having, e.g., a cylindrical shape and a rotor hub 41 having a disc shape. The rotor 38 is a single-piece member made of a magnetic material such as steel. The rotor hub 41 projects outward in the radial direction Z from an end 40b on the other side X2 in the axial direction of the tubular portion 40. The tubular portion 40 surrounds substantially the entire outer periphery of the shaft body portion 101. The tubular portion 40 is fitted in the electromagnet 36 with small clearance between the tubular portion 40 and the inner periphery of the electromagnet 36.

The rotor hub 41 includes an electromagnet facing surface 41b and an armature facing surface 41a. The electromagnet facing surface 41b faces the exciting surface of the electromagnet 36 in the axial direction X. The armature facing surface 41a faces the armature 39 in the axial direction X. The rotor hub 41 is placed with small clearance between the electromagnet facing surface 41b and the exciting surface of the electromagnet 36. That is, the rotor hub 41 is placed so as to be located in a magnetic field that is produced around the exciting coil 37a of the electromagnet 36.

The rotor hub 41 has one or more (e.g., three) slits 42 in a portion facing the exciting surface 36a of the electromagnet 36. The slit 42 extends in the circumferential direction Y. The slit 42 is formed in order to effectively form a magnetic path between the electromagnet 36 and the armature 39. The slit 42 has an annular overall shape and divides the rotor hub 41 into two in the radial direction Z. The inner peripheral portion and the outer peripheral portion of the rotor hub 41 are connected to each other by the same number of bridges (not shown) as that of slits 42.

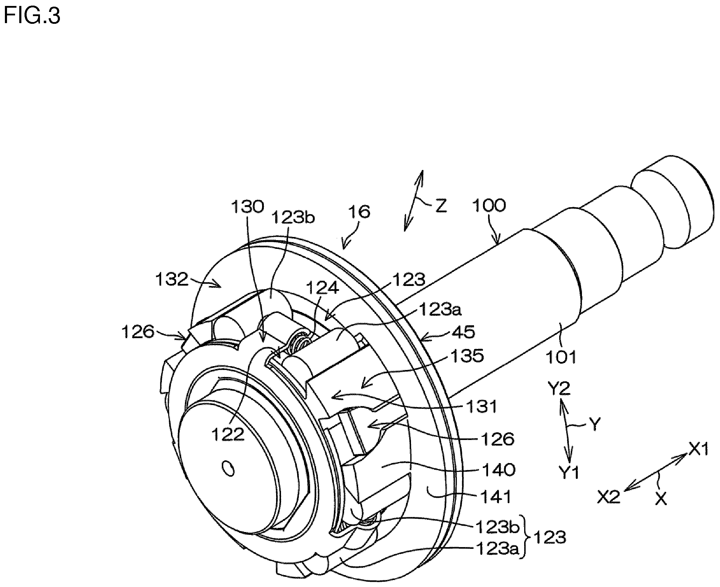

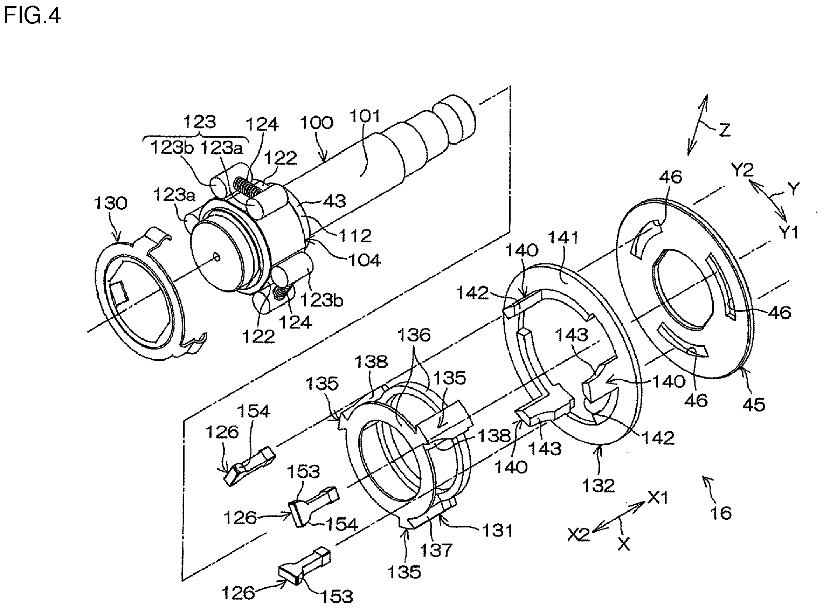

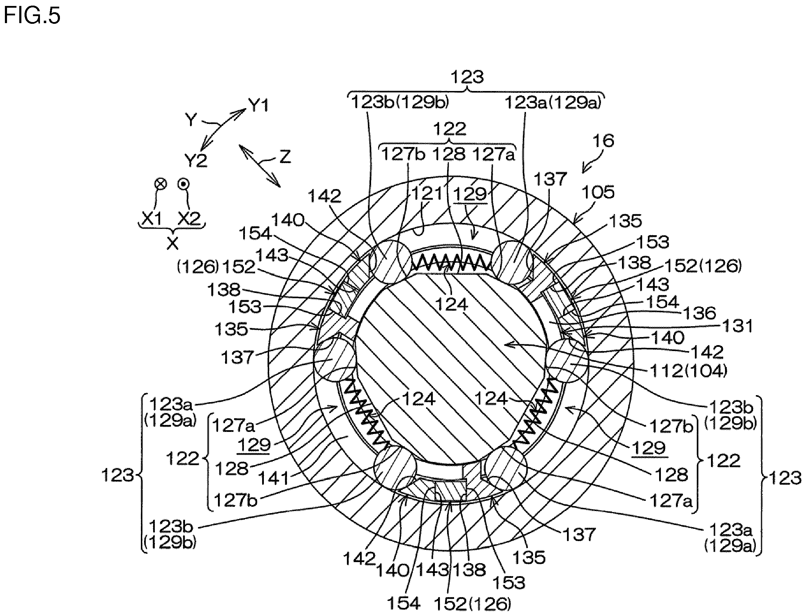

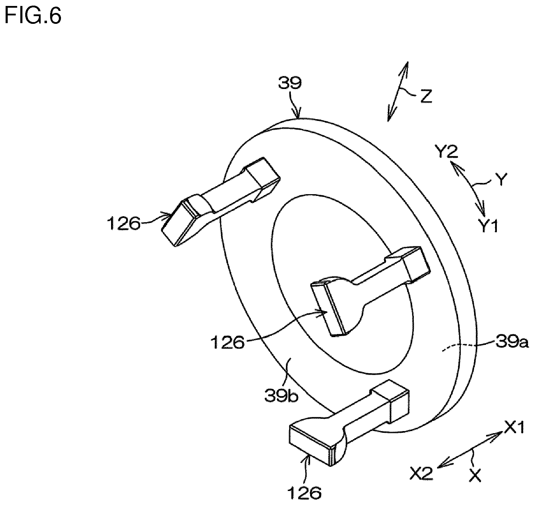

The armature 39 has an annular shape. The armature 39 may have a plate shape as shown in FIGS. 2 and 6 or may have other shapes. The armature 39 is made of a magnetic material. The armature 39 has a facing surface 39a and an opposite surface 39b. The facing surface 39a faces the rotor hub 41 in the axial direction X, and the opposite surface 39b is the opposite surface of the armature 39 from the facing surface 39a. FIG. 3 is a perspective view mainly showing the configuration of the clutch unit 16. FIG. 4 is an exploded perspective view mainly showing the configuration of the clutch unit 16. FIG. 5 is a sectional view taken along line V-V and viewed in the direction of arrows V in FIG. 2. The outer ring 105 is not shown in FIGS. 3 and 4.

The clutch unit 16 will be described with reference to FIGS. 2 to 5. The clutch unit 16 is what is called a two-way roller clutch. The clutch unit 16 includes the inner ring 104, the outer ring 105, a roller pair 123, and first and second pressing members 131, 132. The inner ring 104 is disposed coaxially with the shaft body portion 101 and can rotate with the shaft body portion 101. The outer ring 105 is disposed coaxially with the output shaft 26 and can rotate with the output shaft 26. The roller pair 123 is placed in each of one or more (e.g., three in the present embodiment) wedge spaces 29 formed by the outer periphery of the inner ring 104 and the inner periphery of the outer ring 105. The roller pairs 123 are arranged next to each other in the circumferential direction Y. The first and second pressing members 131, 132 are disposed so that they can rotate relative to each other about the shaft body portion 101. The roller pair 123 includes a first roller 123a and a second roller 123b.

The inner ring 104 is formed by a larger diameter portion 112 of the inner shaft 100. That is, the inner ring 104 is formed integrally with the shaft body portion 101. The larger diameter portion 112 has a larger diameter than the shaft body portion 101. The outer periphery of the larger diameter portion 112 includes a plurality of (e.g., three) cam surfaces 122 and a cylindrical surface 43. The cylindrical surface 43 adjoins the cam surfaces 122 on the one side X1 in the axial direction and has a smaller diameter than the cam surfaces 122. The inner ring 104 may be a separate member from the shaft body portion 101.

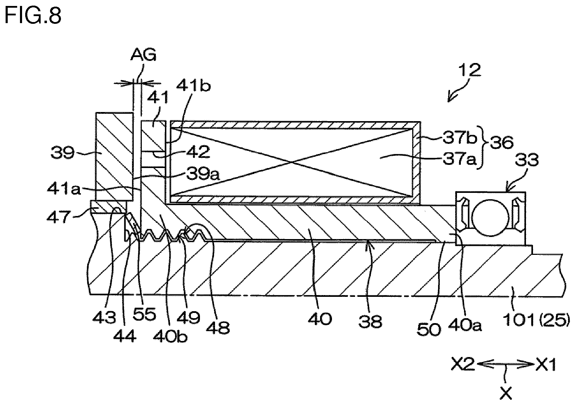

The cylindrical surface 43 is continuous with the shaft body portion 101 through a stepped portion 44 shown in FIG. 8. For example, the stepped portion 44 is an annular stepped portion formed by a surface perpendicular to the axial direction X. The stepped portion 44 need not necessarily be the annular stepped portion, and may be a stepped portion formed only partially in the circumferential direction Y. The outer ring 105 has a tubular shape having a closed end on the other side X2 in the axial direction, and is made of a metal material. The output shaft 26 is connected to the closed end of the outer ring 105. The outer ring 105 may be formed integrally with the output shaft 26 as shown in FIG. 2, or may be a separate member from the output shaft 26.

The outer ring 105 has a first annular stepped portion 113 and a second annular stepped portion 114 on its inner periphery. The first annular stepped portion 113 and the second annular stepped portion 114 are located in this order from the closed end side, and the second annular stepped portion 114 has a larger diameter than the first annular stepped portion 113. A third bearing 115 is placed between the inner periphery of the first annular stepped portion 113 and the outer periphery of the output shaft 26. The outer ring 105 supports the inner ring 104 via the third bearing 115 so that the inner ring 104 can rotate and cannot move in the axial direction X. The inner periphery of the second annular stepped portion 114 has a cylindrical surface 121.

As shown in FIGS. 4 and 5, each wedge space 129 is defined by the cylindrical surface 121 and the cam surface 122. The cylindrical surface 121 is formed in the inner periphery of the outer ring 105. The cam surfaces 122 are formed in the outer periphery of the inner ring 104 and face the cylindrical surface 121 in the radial direction Z. Each wedge space 129 narrows toward its both ends in the circumferential direction Y. A first elastic member 124 is placed in each wedge space 129. The first elastic member 124 elastically presses the first and second rollers 123 a, 123b in the circumferential direction Y so as to separate the first and second rollers 123a, 123b further away from each other. For example, the first elastic member 124 is a coil spring etc. The cam surface 122 includes a pair of tilted surfaces 127a, 127b and a flat spring support surface 128. The tilted surfaces 127a, 127b are tilted in the opposite directions to each other with respect to the circumferential direction Y. The spring support surface 128 connects the tilted surfaces 127a, 127b. As shown in FIG. 4, the plurality of first elastic members 124 may be disposed on the outer periphery of the inner ring 104 by an elastic member cage 130 that supports every first elastic member 124.

As shown in FIGS. 3 and 4, the first pressing member 131 includes pillar-shaped first pressing portions 135 and annular first support portions 136. The first support portions 136 support every first pressing portion 135. The first pressing member 131 is placed such that the first support portions 136 are coaxial with the inner ring 104 and the outer ring 105, and the first pressing member 131 can rotate relative to the inner ring 104 and the outer ring 105. The number of first pressing portions 135 is the same as that of roller pairs 123 (in this embodiment, three). The first pressing portions 135 have a pillar shape extending in the axial direction X and are disposed at regular intervals in the circumferential direction Y. The first pressing portions 135 and the first support portions 136 may be a single-piece member made of a synthetic resin material or a metal material. The first pressing member 131 may function as a cage that holds the roller pairs 123. This cage may hold not only the roller pairs 123 but also the first elastic members 124.

As shown in FIG. 4, the second pressing member 132 includes pillar-shaped second pressing portions 140 and an annular second support portion 141. The second support portion 141 supports every second pressing portion 140. The second pressing member 132 is placed such that the second support portion 141 is coaxial with the inner ring 104 and the outer ring 105, and the second pressing member 132 can rotate relative to the inner ring 104 and the outer ring 105. The number of second pressing portions 140 is the same as that of roller pairs 123 (in this embodiment, three). The second pressing portions 140 have a pillar shape extending in the axial direction X and are disposed at regular intervals in the circumferential direction Y. The second pressing portions 140 and the second support portion 141 may be a single-piece member made of a synthetic resin material or a metal material. The second pressing member 132 may function as a cage that holds the roller pairs 123. This cage may hold not only the roller pairs 123 but also the first elastic members 124.

As shown in FIGS. 3 to 5, the first pressing member 131 and the second pressing member 132 are combined such that the first pressing portions 135 and the second pressing portions 140 are alternately arranged in the circumferential direction Y. A corresponding one of wedge members (moving member) 126 is placed between each of the first pressing portions 135 and the second pressing portion 140 that can press the second roller 123b of the roller pair 123 adjacent, on the one side Y1 in the circumferential direction, the roller pair 123 including the first roller 123a that can be pressed by this first pressing portion 135 (hereinafter this second pressing portion 140 is referred to as "the second pressing portion 140 of the adjacent roller pair 123"). On the other side Y2 in the circumferential direction of each of the first pressing portions 135 is placed the second pressing portion 140 that presses the second roller 123b paired with the first roller 123a that can be pressed by this first pressing portion 135, such that a corresponding one of the roller pairs 123 is interposed between the first pressing portion 135 and the second pressing portion 140. On the one side Y1 in the circumferential direction of each of the first pressing portions 135 is placed the second pressing portion 140 of the adjacent roller pair 123 such that a corresponding one of the wedge members 126 is interposed between the first pressing portion 135 and the second pressing portion 140 of the adjoining roller pair 123.

As shown in FIGS. 4 and 5, each of the first pressing portions 135 has a first pressing surface 137 in its surface on the other side Y2 in the circumferential direction. The first pressing surface 137 presses the first roller 123a of a corresponding one of the roller pairs 123. The first pressing surface 137 surface-contacts the first roller 123a and presses the first roller 123a toward the one side Y1 in the circumferential direction. The first pressing surface 137 may line-contact or point-contact the first roller 123a.

As shown in FIGS. 4 and 5, each of the first pressing portions 135 has a first sliding contacted surface 138 in its surface on the one side Y1 in the circumferential direction. The first sliding contacted surface 138 is a surface that extends toward the other side Y2 in the circumferential direction as the surface extends toward the other side X2 in the axial direction. A first sliding contact surface 153 of a corresponding one of the wedge members 126 is in sliding contact with the first sliding contacted surface 138. In the present embodiment, the first sliding contacted surface 138 is a concavely curved surface. The concavely curved surface is concavely curved with respect to the axial direction X with curvature smaller than that of the first sliding contact surface 153 that is a convexly curved surface. The first sliding contacted surface 138 may include a tilted flat surface.

As shown in FIGS. 4 and 5, each of the second pressing portions 140 has a second pressing surface 142 in its surface on the one side Y1 in the circumferential direction. The second pressing surface 142 presses the second roller 123b of a corresponding one of the roller pairs 123. The second pressing surface 142 surface-contacts the second roller 123b and presses the second roller 123b toward the other side Y2 in the circumferential direction. The second pressing surface 142 may line-contact or point-contact the second roller 123b.

As shown in FIGS. 4 and 5, each of the second pressing portions 140 has a second sliding contacted surface 143 in its surface on the other side Y2 in the circumferential direction. The second sliding contacted surface 143 is a surface that extends toward the one side Y1 in the circumferential direction as the surface extends toward the other side X2 in the axial direction. A second sliding contact surface 154 of a corresponding one of the wedge members 126 is in sliding contact with the second sliding contacted surface 143. In the present embodiment, the second sliding contacted surface 143 is a concavely curved surface. The concavely curved surface is concavely curved with respect to the axial direction X with curvature smaller than that of the second sliding contact surface 154 that is a convexly curved surface. The second sliding contacted surface 143 may include a tilted flat surface.

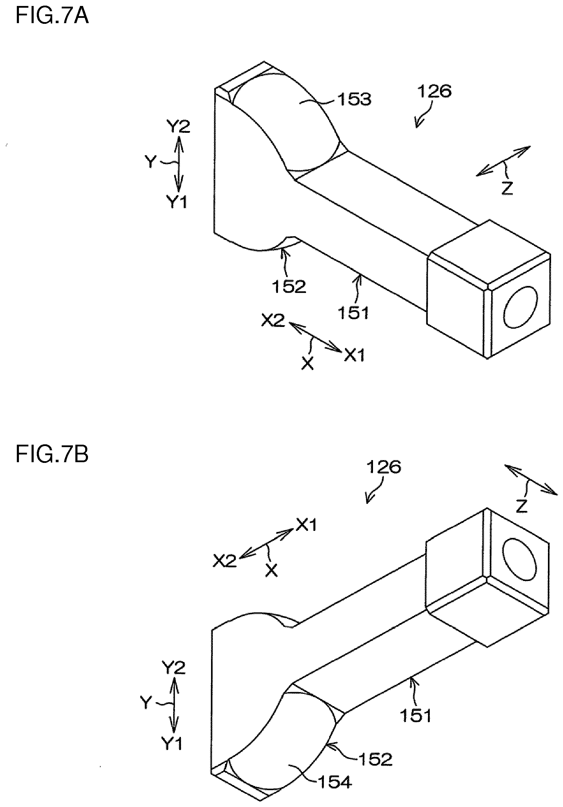

FIG. 6 is a perspective view of the armature 39 and the wedge members 126. FIGS. 7A and 7B are perspective views of the wedge member 126. The wedge member 126 has a pillar shape extending in the axial direction X and is made of a resin material, steel, etc. The number of wedge members 126 is the same as that of roller pairs 123 of the clutch unit 16. Each wedge member 126 has its end on the one side X1 in the axial direction coupled to the armature 39, so that each wedge member 126 can move with the armature 39 in the axial direction X.

In the present embodiment, as shown in FIG. 6, each wedge member 126 is fixed to the armature 39. More specifically, each wedge member 126 has its end on the one side X1 in the axial direction fixed to the opposite surface 39b of the armature 39. The wedge members 126 and the armature 39 may be molded as a single-piece member. Alternatively, the wedge members 126 and the armature 39 may be formed as separate members and these separate members may be joined together. FIGS. 7A and 7B are perspective views showing the configuration of the wedge member 126. FIGS. 7A and 7B show the wedge member 126 as viewed in two different directions.

Each wedge member 126 includes a shaft portion 151 and a wedge portion 152. The shaft portion 151 is placed between the first pressing portion 135 (see FIG. 4 etc.) and the second pressing portion 140 of the adjacent roller pair 123 (see FIG. 4 etc.). The wedge portion 152 is formed at an end on the other side X2 in the axial direction of the shaft portion 151 and extends toward both sides in the circumferential direction Y. The wedge portion 152 includes the first sliding contact surface 153 and the second sliding contact surface 154. The wedge portion 152 has the first sliding contact surface 153 in its surface on the other side Y2 in the circumferential direction, and has the second sliding contact surface 154 in its surface on the one side Y1 in the circumferential direction. The wedge portion 152 is in sliding contact with the first and second pressing members 131, 132 (see FIG. 4 etc.) from other side X2 in the axial direction.

The first sliding contact surface 153 formed in the surface on the other side Y2 in the circumferential direction of the wedge portion 152 is a surface that extends toward the other side Y2 in the circumferential direction as the surface extends toward the other side X2 in the axial direction. The second sliding contact surface 154 formed in the surface on the one side Y1 in the circumferential direction of the wedge portion 152 is a surface that extends toward the one side Y1 in the circumferential direction as the surface extends toward the other side X2 in the axial direction. The first and second sliding contact surfaces 153, 154 of the wedge portion 152 are thus formed so as to extend toward both sides in the circumferential direction, namely away from each other, as the surfaces extend toward the other side X2 in the axial direction. The first and second sliding contact surfaces 153, 154 may be flat surfaces (tilted flat surfaces).

As shown in FIGS. 2 and 4, the driving force transmission device 12 further includes a holding plate 45. The holding plate 45 holds the plurality of wedge members 126 between the armature 39 and the first and second pressing members 131, 132. The holding plate 45 has an annular disc shape and is fitted on and fixed to the cylindrical surface 43 of the larger diameter portion 112. For example, the holding plate 45 is made of a steel material. The holding plate 45 has a plurality of insertion holes 46 (the same number as that of wedge members 126) at regular intervals in the circumferential direction Y Each insertion hole 46 corresponds to one of the wedge members 126. Each wedge member 126 is inserted through a corresponding one of the insertion holes 46 and is coupled and fixed to the armature 39.

As shown in FIG. 2, the driving force transmission device 12 further includes a guide ring 47. The guide ring 47 guides movement in the axial direction X of the armature 39 from the inner peripheral side. The guide ring 47 is placed on the one side X1 in the axial direction of the holding plate 45 and is fitted on and fixed to the cylindrical surface 43 of the larger diameter portion 112. FIG. 8 is a diagram showing the positional relationship between the armature 39 and the rotor 38 at the time the clutch unit 16 is in an engaged state.

As shown in FIGS. 2 and 8, the shaft portion 101 has an externally threaded portion 48 in its outer periphery. The externally threaded portion 48 is formed only in an end 101b on the other side X2 in the axial direction of the shaft portion 101. The externally threaded portion 48 has a few ridges (e.g., about two to five). The tubular portion 40 of the rotor 38 has an internally threaded portion 49 in its outer periphery. The internally threaded portion 49 engages with the externally threaded portion 48. The internally threaded portion 49 is formed only in the end 40b on the other side X2 in the axial direction of the tubular portion 40. The internally threaded portion 49 has about the same number of ridges as the externally threaded portion 48. The inner periphery of the tubular portion 40 is screw-fitted on the outer periphery of the shaft body portion 101 by engagement between the externally threaded portion 48 and the internally threaded portion 49.

The tubular portion 40 of the rotor 38 has a projecting portion 50 for centering in its end 40a on the one side X1 in the axial direction. For example, the projecting portion 50 is an annular projecting portion. The projecting portion 50 is formed in the inner periphery of the tubular portion 40. Centering of the shaft portion 101 and the rotor 38 is thus achieved with the tubular portion 40 being screw-fitted on the shaft body portion 101. As shown in FIGS. 2 and 8, a second elastic member 55 is interposed between the stepped portion 44 and the rotor hub 41. The second elastic member 55 elastically presses the rotor 38 screw-fitted on the outer periphery of the shaft body portion 101 toward the electromagnet 36 (the one side X1 in the axial direction). A disc spring or a wave spring may be used as the second elastic member 55. Alternatively, a helical compression spring may be used as the second elastic member 55. In this case, a plurality of helical compression springs may be arranged at regular intervals in the circumferential direction Y, or a single helical compression spring may be placed so as to surround the shaft body portion 101. The second elastic member 55 is not limited to springs. For example, a rubber member may be used as the second elastic member 55.

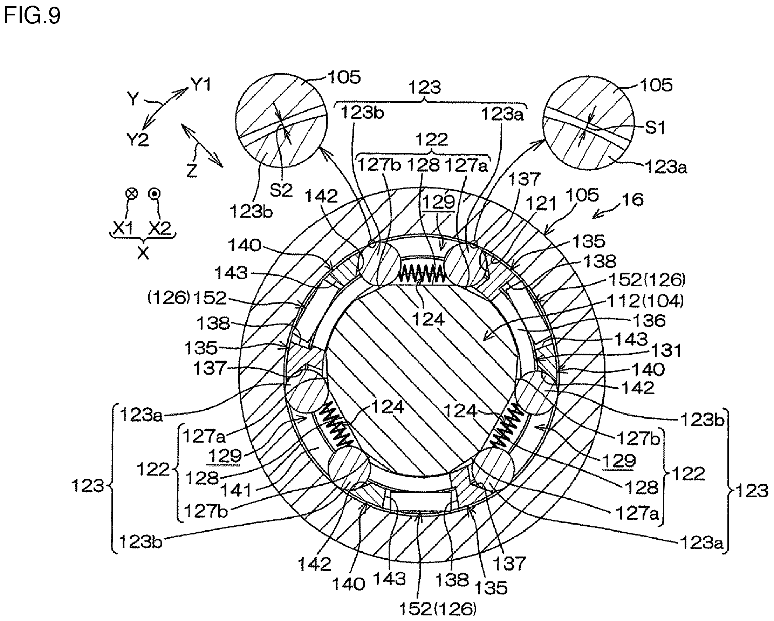

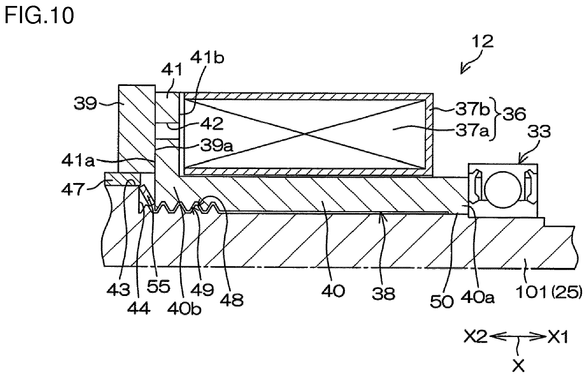

As shown in FIGS. 2 and 8, rotation of the rotor 38 relative to the shaft body portion 101 is stopped by press-fitting the first bearing 33. Specifically, the first bearing 33 is press-fitted into the first bearing support portion 31 so as to abut on the end 40a on the one side X1 in the axial direction of the tubular portion 40 of the rotor 38, whereby the position in the axial direction X of the first bearing 33 is fixed. FIG. 8 is a diagram showing the positional relationship between the armature 39 and the rotor 38 at the time the clutch unit 16 is in an engaged state. FIG. 9 is a sectional view showing the clutch unit 16 in a disengaged state. FIG. 10 is a diagram showing the positional relationship between the armature 39 and the rotor 38 at the time the clutch unit 16 is in the disengaged state.

As described above, the rotor hub 41 is placed so as to be located in the magnetic field to be produced around the exciting coil 37a when a current is applied to the exciting coil 37a. The armature 39 is placed so as to be located in the magnetic field to be produced around the exciting coil 37a. The exciting coil 37a (electromagnet 36), the rotor hub 41, and the armature 39 thus form a magnetic circuit. In other words, the rotor hub 41 and the armature 39 form a part of the magnetic circuit.

The tubular portion 40 and the shaft body portion 101 are made of a magnetic material, and the inner periphery of the projecting portion 50 closely contacts the outer periphery of the shaft body portion 101. This allows a magnetic force from the shaft body portion 101 to be satisfactorily applied to the rotor 38 via the projecting portion 50. When a current flows in the exciting coil 37a and a magnetic field is produced in and around the exciting coil 37a, the armature facing surface 41a of the rotor hub 41 functions as an attracting surface. The armature facing surface 41a attracts the armature 39 toward the one side X1 in the axial direction, and the armature 39 moves toward the one side X1 in the axial direction. With the movement of the armature 39, the wedge members 126 move toward the one side X1 in the axial direction.

When the clutch unit 16 is in an engaged state, power supply to the electromagnet 36 is cut off. In this case, no current flows in the exciting coil 37a. Accordingly, no magnetic field is produced around the exciting coil 37a, and no magnetic flux is generated in the magnetic circuit. The rotor hub 41 therefore does not attract the armature 39 toward the one side X1 in the axial direction. The wedge members 126 are thus placed at their engaged position (position shown in FIG. 8). When the wedge members 126 are located at their engaged position, the armature 39 faces the armature facing surface 41a of the rotor hub 41 with a predetermined air gap AG (see FIG. 8) therebetween.

When the wedge members 126 are located at their engaged position, the clutch unit 16 is in an engaged state, as shown in FIG. 5. In this engaged state, the first elastic members 124 elastically press the first rollers 123a toward first engaged positions 129a at the ends on the one side Y1 in the circumferential direction of the wedge spaces 129. The first rollers 123a thus engage with the outer periphery of the inner ring 104 and the inner periphery of the outer ring 105. In this state, as shown in FIG. 5, the first elastic members 124 elastically press the second rollers 123b toward second engagement positions 129b at the ends on the other side Y2 in the circumferential direction of the wedge spaces 129. The second rollers 123b thus engage with the outer periphery of the inner ring 104 and the inner periphery of the outer ring 105. The clutch unit 16 in the engaged state mechanically couples the input shaft 25 and the output shaft 26 in this manner, whereby the steering member 3 (see FIG. 1) is mechanically coupled to the steering operation mechanism A (see FIG. 1).

On the other hand, when the clutch unit 16 is in a disengaged state, power supply to the electromagnet 36 is permitted. Accordingly, a current flows in the exciting coil 37a, and a magnetic field is produced around the exciting coil 37a. As a result, magnetic flux is generated in the magnetic circuit. As shown in FIG. 10, the wedge members 126 are thus attracted by the clutch unit 16 toward the one side X1 in the axial direction and moved toward the one side X1 in the axial direction (e.g., by about 1 to 2 mm). Accordingly, the wedge members 126 are placed at their disengaged position (position shown in FIG. 10) located on the one side X1 in the axial direction with respect to their engaged position (position shown in FIG. 8). When the wedge members 126 are located in their disengaged position (position shown in FIG. 10), the armature facing surface 41a of the rotor hub 41 contacts the facing surface 39a of the armature 39.

As described above, in the wedge member 126, the first sliding contact surface 153 is a surface that extends toward the other side Y2 in the circumferential direction as the surface extends toward the other side X2 in the axial direction, and the second sliding contact surface 154 is a surface that extends toward the one side Y1 in the circumferential direction as the surface extends toward the other side X2 in the axial direction. Accordingly, with the movement of the wedge members 126 toward the one side X1 in the axial direction, the first pressing member 131 is moved toward the other side Y2 in the circumferential direction and the second pressing member 132 is moved toward the one side Y1 in the circumferential direction.

Since the first pressing member 131 is moved toward the other side Y2 in the circumferential direction with respect to the wedge members 126, the first pressing portions 135 press and move the first rollers 123a toward the other side Y2 in the circumferential direction against the elastic pressing force of the first elastic members 124. The first rollers 123a are thus released from the first engaged positions 129a (see FIG. 5), and as shown in FIG. 9, clearance S1 is produced between each of the first rollers 123a and the inner periphery of the outer ring 105. The first rollers 123a are thus disengaged from the outer periphery of the inner ring 104 and the inner periphery of the outer ring 105.

Since the second pressing member 132 is moved toward the one side Y1 in the circumferential direction with respect to the wedge members 126, the second pressing portions 140 press and move the second rollers 123b toward the one side Y1 in the circumferential direction against the elastic pressing force of the first elastic members 124. The second rollers 123b are thus released from the second engaged positions 129b (see FIG. 5), and as shown in FIG. 9, clearance S2 is produced between each of the second rollers 123b and the inner periphery of the outer ring 105. The second rollers 123b are thus disengaged from the outer periphery of the inner ring 104 and the inner periphery of the outer ring 105.

When the wedge members 126 are located at their disengaged position (position shown in FIG. 10), the clutch unit 16 is in a disengaged state. In this disengaged state, the rollers 123a, 123b are disengaged from the inner ring 104 and the outer ring 105. The input shaft 25 and the output shaft 26 are mechanically decoupled from each other by the clutch unit in the disengaged state. The steering member 3 (see FIG. 1) is thus decoupled from the steering operation mechanism A (see FIG. 1).

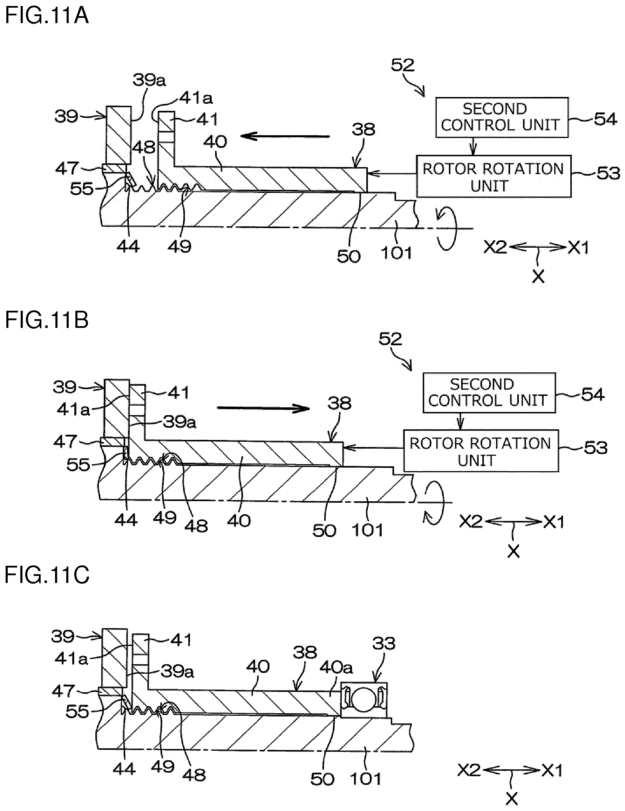

FIGS. 11A, 11B, and 11C are diagram showing an operation of attaching the rotor 38 to the shaft body portion 101 of the inner shaft 100. The operation of attaching the rotor 38 to the shaft body portion 101 is performed before the electromagnet 36 is mounted on the shaft body portion 101. The operation of attaching the rotor 38 to the shaft body portion 101 is performed by using an assembly device 52. The assembly device 52 adjusts the air gap AG between the armature 39 and the rotor 38.

The assembly device 52 includes a rotor rotation unit 53 and a second control unit 54. The rotor rotation unit 53 rotates the rotor 38 in the forward and reverse directions. The second control unit 54 controls the rotation operation of the rotor rotation unit 53. When the rotor 38 is attached to the shaft body portion 101, the rotor 38 is first fitted on the shaft body portion 101. In this state, the armature facing surface 41a of the rotor hub 41 faces the facing surface 39a of the armature 39.

The second control unit 54 controls the rotor rotation unit 53 to rotate the rotor 38 fitted on the shaft body portion 101 in the direction in which a screw is tightened. The rotor 38 is thus screw-fitted on the shaft body portion 101. With the inner periphery of the rotor 38 being screw-fitted on the outer periphery of the shaft body portion 101, the rotor 38 is rotated relative to the shaft body portion 101. The externally threaded portion 48 and the internally threaded portion 49 are thus moved in accordance with their lead angles, whereby the rotor 38 moves in the axial direction X with respect to the shaft body portion 101. The second control unit 54 controls the rotor rotation unit 53 to rotate the rotor 38 in the direction in which a screw is tightened to move the rotor 38 toward the other side X2 in the axial direction, as shown in FIG. 11A. This rotation of the rotor 38 is continued until the armature facing surface 41a of the rotor hub 41 contacts the facing surface 39a of the armature 39 (contact step).

After the rotor hub 41 contacts the armature 39, the second control unit 54 controls the rotor rotation unit 53 to rotate the rotor 38 in the reverse direction (i.e., the direction in which a screw is loosened) to move the rotor 38 toward the one side X1 in the axial direction, as shown in FIG. 11B. The position of the rotor 38 in the axial direction X is adjusted by controlling the amount of rotation of the rotor 38 (rotor position adjustment step).

The rotor 38 screw-fitted on the outer periphery of the shaft body portion 101 is elastically pressed toward the electromagnet 36 by the second elastic member 55. This allows the rotor 38 to be rotated with no gap in the axial direction X between the externally threaded portion 48 and the internally threaded portion 49 engaged with each other. The correspondence between the amount of rotation of the rotor 38 relative to the shaft body portion 101 and the amount of movement of the rotor 38 in the axial direction X can thus be defined precisely. Accordingly, in the rotor position adjustment step, the rotor 38 can be accurately moved by a predetermined distance from the position where the rotor 38 contacts the armature 39 by controlling the amount of rotation of the rotor 38. The air gap AG can therefore be adjusted to a desired size.

As shown in FIG. 11C, after the air gap AG is adjusted by moving the rotor 38, the first bearing 33 is pressed against the end 40a on the one side X1 in the axial direction of the tubular portion 40 of the rotor 38 and is press-fitted on the outer periphery of the shaft body portion 101. Rotation of the rotor 38 relative to the shaft body portion 101 is thus stopped (rotation stopping step). As described above, according to the present embodiment, the internally threaded portion 49 that engages with the externally threaded portion 48 on the outer periphery of the shaft body portion 101 is formed on the inner periphery of the rotor 38. The rotor 38 is rotated relative to the shaft body portion 101 with the inner periphery of the rotor 38 being screw-fitted on the outer periphery of the shaft body portion 101. The externally threaded portion 48 and the internally threaded portion 49 thus move in accordance with their lead angles, and the rotor 38 moves in the axial direction X with respect to the shaft body portion 101. Accordingly, the position of the rotor 38in the axial direction X relative to the shaft body portion 101 can be adjusted by rotating the rotor 38. The position of the rotor 38 in the axial direction X is adjusted by rotating the rotor 38 screw-fitted on the outer periphery of the shaft body portion 101 relative to the shaft body portion 101. The position of the rotor 38 in the axial direction X relative to the shaft body portion 101 can thus be accurately adjusted. After the position of the rotor 38 in the axial direction X is adjusted, the operation of stopping rotation of the rotor 38 is performed. The position in the axial direction X of the rotor 38 is thus fixed.

The rotor 38 screw-fitted on the outer periphery of the shaft body portion 101 is elastically pressed toward the electromagnet 36 by the second elastic member 55. This allows the rotor 38 to be rotated with no gap in the axial direction X between the externally threaded portion 48 and the internally threaded portion 49 engaged with each other. The correspondence between the amount of rotation of the rotor 38 relative to the shaft body portion 101 and the amount of movement of the rotor 38 in the axial direction X can thus be defined precisely. Accordingly, the position of the rotor 38 in the axial direction X with respect to the shaft body portion 101 can be adjusted more accurately.

Since the position of the rotor 38 in the axial direction X with respect to the shaft body portion 101 can be easily accurately adjusted, the air gap AG between the armature 39 and the rotor 38 can be easily accurately adjusted. The air gap AG between the armature 39 and the rotor 38 can be more easily adjusted as compared to the case where a shim ring having an optimal thickness is selected from a multiplicity of kinds of shim rings and interposed between the stepped portion 44 and the rotor 38. Since there is no need to prepare the multiplicity of kinds of shim rings, adjustment of the air gap AG can be made inexpensively.

The rotor 38 is rotated in the direction in which a screw is tightened, and the rotor 38 is moved toward the armature 39 until the rotor 38 contacts the armature 39. After the rotor 38 contacts the armature 39, the rotor 38 is rotated in the reverse direction. The rotor 38 is thus moved away from the armature 39. The rotor 38 is rotated by an amount corresponding to the air gap AG of a desired size from the position where the rotor 38 contacts the armature 39. The air gap AG can thus be adjusted to the desired size.

In this case, the rotor 38 is rotated in the direction in which a screw is tightened, until the rotor 38 contacts the armature 39. Subsequently, the rotor 38 is rotated in the direction in which a screw is loosened. The air gap AG can be adjusted by this simple operation. As the rotor 38 is elastically pressed by the second elastic member 55, the correspondence between the amount of rotation of the rotor 38 and the amount of movement of the rotor 38 in the axial direction X is defined precisely. The position of the rotor 38 in the axial direction X can therefore be accurately adjusted by controlling the amount of rotation of the rotor 38. Accordingly, the air gap AG between the rotor 38 and the armature 39 can be adjusted more accurately and more easily.

The first bearing 33 that rotatably supports the electromagnet 36 is press-fitted and fixed to the end 40a on the one side X1 in the axial direction of the rotor 38. Rotation of the rotor 38 relative to the shaft body portion 101 is thus stopped. Stopping of rotation of the rotor 38 relative to the shaft body portion 101 is implemented by using the first bearing 33. Accordingly, stopping of rotation of the rotor 38 can be implemented more inexpensively as compared to the case where a separate rotation stopper member is provided to stop rotation of the rotor 38.

There is clearance in the radial direction Z between the externally threaded portion 48 and the internally threaded portion 49 which are engaged with each other. If the internally threaded portion 49 is formed on the entire inner periphery of the tubular portion 40, the tubular portion 40 cannot be placed coaxially with the shaft body portion 101. The internally threaded portion 49 is formed only on a part of the tubular portion 40 in the axial direction X, and the projecting portion 50 for centering is formed in another part of the tubular portion 40 in the axial direction. Centering of the shaft body portion 101 and the rotor 38 can thus be satisfactorily performed with the tubular portion 40 being screw-fitted on the shaft body portion 101. As a result, the rotor 38 can be rotated satisfactorily.

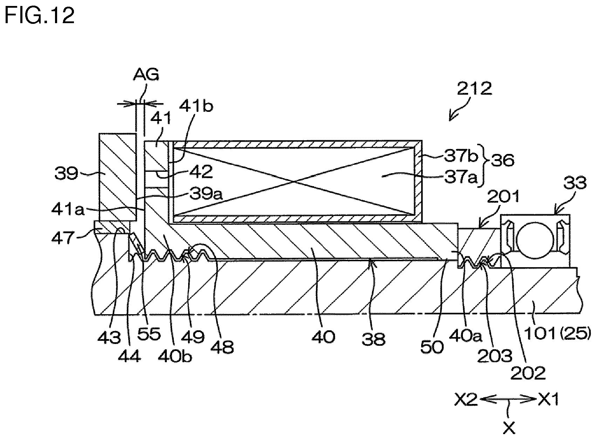

Moreover, if the inner periphery of the tubular portion 40 of the rotor 38 does not closely contact the outer periphery of the shaft body portion 101, a magnetic force is less likely to be applied between the shaft body portion 101 and the rotor 38. The projecting portion 50 is fitted on the shaft body portion 101 such that the inner periphery of the projecting portion 50 closely contacts the outer periphery of the shaft body portion 101. In this case, the magnetic force from the shaft body portion 101 can be satisfactorily applied to the rotor 38 through the projecting portion 50. FIG. 12 is a diagram showing the general configuration of a main part of a driving force transmission device 212 according to another embodiment of the present invention.

In the embodiment shown in FIG. 12, the portions corresponding to those shown in the embodiment of FIGS. 1 to 11C are denoted with the same reference characters as those of FIGS. 1 to 11C, and description thereof will be omitted. The driving force transmission device 212 is different from the driving force transmission device 12 in that rotation of the rotor 38 relative to the shaft body portion 101 is stopped by the structure in which the end 40a on the one side X1 in the axial direction of the tubular portion 40 is fastened by a nut 201 fitted on the shaft body portion 101. The shaft body portion 101 has an externally threaded portion 202 on its outer periphery. The externally threaded portion 202 is formed on the one side X1 in the axial direction with respect to a part of the outer periphery of the shaft body portion 101 which faces the end 40a of the tubular portion 40. The nut 201 has an internally threaded portion 203 on its inner periphery. The internally threaded portion 203 engages with the externally threaded portion 202. After the rotor position adjustment step shown in FIG. 11B etc., the nut 201 is screw-fitted on the outer periphery of the shaft body portion 101. The nut 201 is rotated in the direction in which a screw is tightened, so that the end 40a on the one side X1 in the axial direction of the tubular portion 40 is fastened toward the other side X2 in the axial direction by the nut 201. Since a load in the axial direction X can thus be applied to the rotor 38, rotation of the rotor 38 relative to the shaft body portion 101 can thus be firmly stopped.

Although the two embodiments of the present invention are described above, the present invention may be carried out in other forms. For example, a configuration in which the end 40a of the tubular portion 40 is pressed toward one side X1 in the axial direction by a press fit ring that is press-fitted on the shaft body portion 101 may be used as the rotation stopper structure that stops rotation of the rotor 38. The end 40a of the tubular portion 40 may be clinched to the shaft body portion 101 in order to stop rotation of the rotor 38.

The externally threaded portion 48 need not necessarily be formed on the end 40b on the other side X2 in the axial direction of the tubular portion 40, and may be formed on any other portion. The projecting portion 50 for centering may be formed on a portion other than the end 40b on the one side X1 in the axial direction of the tubular portion 40 as long as this portion is located at a position other than the position where the externally threaded portion 48 is formed. Although the annular projecting portion 50 is described above as an example of the projecting portion for centering, the projecting portion for centering may be formed by a plurality of projections arranged at intervals in the circumferential direction. Alternatively, the projecting portion for centering may be omitted.

The moving member is not limited to the wedge member 126 having the wedge portion 152, and may be a member having other shapes. Although the rotor 38 having the tubular portion 40 is described above, the rotor 38 may have an annular shape. In this case, the rotor is mainly formed by the rotor hub 41.

The shaft body portion 101 (shaft body) may be included in the output shaft 26 instead of the input shaft 25. That is, the configurations of the driving force transmission devices 12, 212 other than the input and output shafts 25, 26 may be inverted with respect to the axial direction X.

A clutch other than what is called a two-way roller clutch may be used as the clutch unit 16. For example, a one-way roller clutch having a single roller in a wedge space, or a dry plate clutch may be used as the clutch unit 16. The present invention is not limited to driving force transmission devices mounted on the steering system 1, and is also applicable to other driving force transmission mechanisms (e.g., driving force transmission mechanisms for switching between a two-wheel drive mode and a four-wheel drive mode).

## Claims

1. A driving force transmission device, (12) comprising:
an input shaft (104) and an output shaft (26) which are placed coaxially with each other;
a clutch unit (100) that connects and disconnects the input shaft and the output shaft to and from each other;
an electromagnet (36) that is disposed so that the electromagnet can rotate relative to a shaft body (101) included in one of the input shaft and the output shaft;
a rotor (38) that faces the electromagnet in an axial direction of the shaft body;
an armature (39) that is placed so as to face an opposite side of the rotor from the electromagnet and so that the armature can move in the axial direction, and that engages and disengages the clutch **characterised in that** it further comprises;
an internally threaded portion (49) that is formed on an inner periphery of the rotor and engages with an externally threaded portion formed on an outer periphery of the shaft body; and
an elastic member (55) that elastically presses the rotor screw-fitted on the outer periphery of the shaft body toward the electromagnet; and
a rotation stopper structure (33) that stops rotation of the rotor relative to the shaft body.

2. The driving force transmission device according to claim 1, further comprising:
a bearing that is fitted on and fixed to the shaft body and rotatably supports the electromagnet, wherein
the rotation stopper structure includes a structure that press-fits and fixes the bearing to an axial end of the rotor which is remote from the armature.

3. The driving force transmission device according to claim 1, wherein
the rotation stopper structure includes a structure that fastens an axial end of the rotor which is remote from the armature by a nut that is screw-fitted on the outer periphery of the shaft body.

4. The driving force transmission device according to any one of claims 1 to 3, wherein
the elastic member is interposed between a stepped portion formed on the outer periphery of the shaft body and the rotor.

5. The driving force transmission device according to any one of claims 1 to 4, wherein
the rotor includes a tubular portion that surrounds the outer periphery of the shaft body, and
the internally threaded portion is formed in a portion of an inner periphery of the tubular portion in the axial direction.

6. The driving force transmission device according to claim 5, wherein
the tubular portion and the shaft body are made of a magnetic material.

7. The driving force transmission device according to claim 5 or 6, wherein
a projecting portion for centering of the shaft body and the tubular portion is formed in a predetermined portion of the inner periphery of the tubular portion which is located at a position other than a portion where the externally threaded portion is formed.

8. The driving force transmission device according to claim 7, wherein
the externally threaded portion is located on an axial end of the tubular portion which is close to the armature, and
the projecting portion is located on an axial end of the tubular portion which is remote from the armature.

9. The driving force transmission device according to any one of claims 1 to 8, wherein
the clutch unit includes
an inner ring coaxially coupled to the shaft body,
an outer ring coaxially coupled to the other of the input shaft and the output shaft and is disposed so that the outer ring can rotate relative to the inner ring,
a roller pair comprised of rollers that are placed in a wedge space formed by an outer periphery of the inner ring and the inner periphery of the outer ring so that the rollers are arranged next to each other in a circumferential direction of the inner ring,
a pair of pressing members that are disposed so that the pressing members can rotate relative to the shaft body, and that are moved in predetermined directions opposite to each other to press the roller pair toward each other, and
a moving member that is disposed so that the moving member can move in the axial direction of the shaft body, and that is moved in the axial direction to move the pair of pressing members in opposite directions to each other, and
the armature is disposed so that the armature can move with the moving member in the axial direction.

## Patentansprüche

1. Einrichtung zur Übertragung einer Antriebskraft (12),
mit einer Eingangswelle (104) und mit einer Ausgangswelle (26),
die koaxial zueinander angeordnet sind;
mit einer Kupplungseinheit (100),
die die Eingangswelle und die Ausgangswelle miteinander verbindet und voneinander trennt;
mit einem Elektromagneten (36),
der so angeordnet ist, dass der Elektromagnet relativ zu einem Wellenkörper (101), der in einer der Eingangswelle oder der Ausgangswelle enthalten ist,
rotieren kann;
mit einem Rotor (38),
der dem Elektromagneten in einer Axialrichtung des Wellenkörpers gegenüber angeordnet ist;
mit einem Anker (39),
der so angeordnet ist, dass er einer von dem Elektromagneten aus gegenüberliegenden Seite des Rotors gegenüber angeordnet ist und dass sich der Anker in der Axialrichtung bewegen kann, und der die Kupplung einkuppelt und auskuppelt;
**dadurch gekennzeichnet, dass** die Einrichtung zur Übertragung einer Antriebskraft des Weiteren umfasst;
einen Innengewindeabschnitt (49),
der auf einem Innenumfang des Rotors ausgebildet ist und der in einen Außengewindeabschnitt, der auf dem Außenumfang des Wellenkörpers ausgebildet ist, eingreift; und
ein elastisches Bauteil (55),
das den Rotor, der auf den Außenumfang des Wellenkörpers aufgeschraubt ist, elastisch zum Elektromagneten hin drückt; und
eine Rotations-Stopp-Struktur (33),
die die Rotation des Rotors relativ zu dem Wellenkörper abstoppt.

2. Einrichtung zur Übertragung einer Antriebskraft nach Anspruch 1, ferner umfassend:
ein Lager, das auf den Wellenkörper aufgesetzt und an dem Wellenkörper fixiert ist und den Elektromagneten drehbar lagert, wobei
die Rotations-Stopp-Struktur eine Struktur enthält, die das Lager mit Presssitz anbringt und an einem axialen Ende des Rotors, das anker-fern ist, fixiert.

3. Einrichtung zur Übertragung einer Antriebskraft nach Anspruch 1, wobei die Rotations-Stopp-Struktur eine Struktur enthält, die ein axiales Ende des Rotors, das anker-fern ist, durch eine Mutter, die auf den Außenumfang des Wellenkörpers geschraubt ist, festsetzt.

4. Einrichtung zur Übertragung einer Antriebskraft nach einem der Ansprüche 1 bis 3, wobei
das elastische Bauteil zwischen einem abgestuften Abschnitt, der auf dem Außenumfang des Wellenkörpers ausgebildet ist, und dem Rotor angeordnet ist.

5. Einrichtung zur Übertragung einer Antriebskraft nach einem der Ansprüche 1 bis 4, wobei
der Rotor einen röhrenförmigen Abschnitt enthält, der den Außenumfang des Wellenkörpers umgibt, und
der Innengewindeabschnitt in einem Abschnitt eines Innenumfangs des röhrenförmigen Abschnitts in der Axialrichtung ausgebildet ist.

6. Einrichtung zur Übertragung einer Antriebskraft nach Anspruch 5, wobei der röhrenförmige Abschnitt und der Wellenkörper aus einem magnetischen Material gefertigt sind.

7. Einrichtung zur Übertragung einer Antriebskraft nach Anspruch 5 oder 6, wobei ein hervorstehender Abschnitt zum Zentrieren des Wellenkörpers und des röhrenförmigen Abschnitts in einem vorbestimmten Abschnitt des Innenumfangs des röhrenförmigen Abschnitts ausgebildet ist, der an einer anderen Position als an einem Abschnitt, an dem der Außengewindeabschnitt ausgebildet ist, angeordnet ist.

8. Einrichtung zur Übertragung einer Antriebskraft nach Anspruch 7, wobei der Außengewindeabschnitt an einem axialen Ende des röhrenförmigen Abschnitts, das anker-nah ist, angeordnet ist, und
der hervorstehende Abschnitt an einem axialen Ende des röhrenförmigen Abschnitts, das anker-fern ist, angeordnet ist.

9. Einrichtung zur Übertragung einer Antriebskraft nach einem der Ansprüche 1 bis 8, wobei
die Kupplungseinheit enthält:
einen Innenring, der koaxial an den Wellenkörper angekoppelt ist,
einen Außenring, der koaxial an der anderen der Eingangswelle und der Ausgangswelle angekoppelt ist und so angeordnet ist, dass der Außenring relativ zu dem Innenring rotieren kann,
ein Rollenpaar, das Rollen umfasst, welches in einem Keilraum, der durch einen Außenumfang des Innenrings und den Innenumfang des Außenrings ausgebildet ist, so angeordnet ist, dass die Rollen in einer Umfangsrichtung des Innenrings nebeneinander angeordnet sind,
ein Paar von Pressbauteilen, die so angeordnet sind, dass die Pressbautelle relativ zu dem Wellenkörper rotieren können, und die in vorbestimmte Richtungen entgegengesetzt zueinander bewegt werden, um das Rollenpaar zueinander zu drücken, und
ein bewegliches Bauteil, das so angeordnet ist, dass sich das bewegliche Bauteil in der Axialrichtung des Wellenkörpers bewegen kann, und das in der Axialrichtung bewegt wird, um das Paar von Pressbauteilen in zueinander entgegengesetzte Richtungen zu bewegen, wobei
der Anker so angeordnet ist, dass er sich mit dem beweglichen Bauteil in der Axialrichtung bewegen kann.

## Revendications

1. Dispositif de transmission de force d'entraînement (12) comprenant :
un arbre d'entrée (104) et un arbre de sortie (26) qui sont placés de manière coaxiale entre eux ;
une unité d'embrayage (100) qui raccorde et déconnecte l'arbre d'entrée et l'arbre de sortie l'un par rapport à l'autre ;
un électroaimant (36) qui est disposé de sorte que l'électroaimant peut tourner par rapport à un corps d'arbre (101) inclus dans l'un parmi l'arbre d'entrée et l'arbre de sortie ;
un rotor (38) qui fait face à l'électroaimant dans une direction axiale du corps d'arbre ;
un induit (39) qui est placé afin de faire face à un côté opposé du rotor par rapport à l'électroaimant et de sorte que l'induit peut se déplacer dans la direction axiale et qui met en prise et dégage l'embrayage, **caractérisé en ce qu'**il comprend en outre :
une partie intérieurement filetée (49) qui est formée sur une périphérie interne du rotor et se met en prise avec une partie extérieurement filetée formée sur une périphérie externe du corps d'arbre ; et
un élément élastique (55) qui comprime élastiquement le rotor monté par vissage sur la périphérie externe du corps d'arbre vers l'électroaimant ; et
une structure de butée de rotation (33) qui arrête la rotation du rotor par rapport au corps d'arbre.

2. Dispositif de transmission de force d'entraînement selon la revendication 1, comprenant en outre :
un palier qui est monté sur et fixé sur le corps d'arbre et supporte, en rotation, l'électroaimant, dans lequel :
la structure de butée de rotation comprend une structure qui est montée à la presse et fixe le palier sur une extrémité axiale du rotor qui est à distance de l'induit.

3. Dispositif de transmission de force d'entraînement selon la revendication 1, dans lequel :
la structure de butée de rotation comprend une structure qui fixe une extrémité axiale du rotor qui est à distance de l'armature par un boulon qui est monté par vissage sur la périphérie externe du corps d'arbre.

4. Dispositif de transmission de force d'entraînement selon l'une quelconque des revendications 1 à 3, dans lequel :
l'élément élastique est intercalé entre une partie étagée formée sur la périphérie externe du corps d'arbre et le rotor.

5. Dispositif de transmission de force d'entraînement selon l'une quelconque des revendications 1 à 4, dans lequel :
le rotor comprend une partie tubulaire qui entoure la périphérie externe du corps d'arbre, et
la partie intérieurement filetée est formée dans une partie d'une périphérie interne de la partie tubulaire dans la direction axiale.

6. Dispositif de transmission de force d'entraînement selon la revendication 5, dans lequel :
la partie tubulaire et le corps d'arbre sont réalisés avec un matériau magnétique.

7. Dispositif de transmission de force d'entraînement selon la revendication 5 ou 6, dans lequel :
une partie en saillie pour centrer le corps d'arbre et la partie tubulaire, est formée dans une partie prédéterminée de la périphérie interne de la partie tubulaire qui est positionnée dans une position différente d'une partie dans laquelle la partie extérieurement filetée est formée.

8. Dispositif de transmission de force d'entraînement selon la revendication 7, dans lequel :
la partie extérieurement filetée est positionnée sur une extrémité axiale de la partie tubulaire qui est proche de l'induit, et
la partie en saillie est positionnée sur une extrémité axiale de la partie tubulaire qui est à distance de l'induit.

9. Dispositif de transmission de force d'entraînement selon l'une quelconque des revendications 1 à 8, dans lequel :
l'unité d'embrayage comprend :
une bague interne couplée, de manière coaxiale, au corps d'arbre,
une bague externe couplée, de manière coaxiale, à l'autre parmi l'arbre d'entrée et l'arbre de sortie et est disposée de sorte que la bague externe peut tourner par rapport à la bague interne,
une paire de rouleaux composée de rouleaux qui sont placés dans un espace de cale formé par une périphérie externe de la bague interne et la périphérie interne de la bague externe de sorte que les rouleaux sont agencés les uns à proximité des autres dans une direction circonférentielle de la bague interne,
une paire d'éléments de pression qui sont disposés de sorte que les éléments de pression peuvent tourner par rapport au corps d'arbre, et qui sont déplacés dans des directions prédéterminées opposées entre elles, pour comprimer la paire de rouleaux l'un vers l'autre, et
un élément mobile qui est disposé de sorte que l'élément mobile peut se déplacer dans la direction axiale du corps d'arbre, et qui est déplacé dans la direction axiale pour déplacer la paire d'éléments de pression dans des directions opposées entre elles, et
l'induit est disposé de sorte que l'induit peut se déplacer avec l'élément mobile dans la direction axiale.
